## Europäisches Patentamt
## European Patent Office
## Office européen des brevets

(19)

(11) Veröffentlichungsnummer : **0 021 210**
**B1**

(12)

# EUROPÄISCHE PATENTSCHRIFT

(45) Veröffentlichungstag der Patentschrift :
**13.07.83**

(51) Int. Cl.³ : **B 01 D   1/02**, C 01 B 17/88

(21) Anmeldenummer : **80103186.5**

(22) Anmeldetag : **09.06.80**

(54) **Verdampfer zum Konzentrieren von Mineralsäure, insbesondere Schwefelsäure.**

(30) Priorität : 16.05.80 DE 3018662
13.06.79 CH 5513/79

(43) Veröffentlichungstag der Anmeldung :
**07.01.81 Patentblatt 81/01**

(45) Bekanntmachung des Hinweises auf die Patenterteilung : **13.07.83 Patentblatt 83/28**

(84) Benannte Vertragsstaaten :
**BE CH DE FR GB IT LI NL SE**

(56) Entgegenhaltungen :
**DE A 2 311 085**
**DE B 1 233 368**
**DE C 611 992**
**GB A 1 515 458**

**NEUE DELIWA-ZEITSCHRIFT, Nr. 10. 1972 Seite
446, linke Spalte, Absätze 6 bis 9**

(73) Patentinhaber : **BAYER AG**
**Zentralbereich Patente, Marken und Lizenzen**
**D-5090 Leverkusen 1, Bayerwerk (DE)**

**BERTRAMS AKTIENGESELLSCHAFT**
**Eptingerstrasse 41**
**CH-4132 Muttenz 1 (CH)** .

(72) Erfinder : **Forter, Hansruedi**
**Schlossweg 3**
**CH-4466 Ormalingen (CH)**
Erfinder : **Groening, Jürgen, Dipl.-Ing.**
**Braschosserstrasse 68**
**D-5200 Siegburg (DE)**
Erfinder : **Kühnlein, Hans L.**
**Hümpeliweg 20**
**CH-4414 Füllinsdorf (CH)**
Erfinder : **Küng, Hans Rudolf**
**Gassackerweg 37**
**CH-4702 Frenkendorf (CH)**
Erfinder : **Maas, Joachim, Dr.**
**Otto-Hahn-Strasse 25**
**D-5010 Bergheim (DE)**
Erfinder : **Schultz, Karl-Heinz, Dr.**
**Deswatinesstrasse 61**
**D-4150 Krefeld (DE)**

# 0 021 210

## Verdampfer zum Konzentrieren von Mineralsäure, insbesondere Schwefelsäure

Gegenstand der vorliegenden Erfindung ist eine Verdampfervorrichtung zum Konzentrieren von Mineralsäure, insbesondere Schwefelsäure, mit Teilen aus oder mindestens beschichtet mit Email. Unter Email werden glasartige Überzüge, die säurefest sind und einer Temperaturwechselbeanspruchung standhalten, verstanden.

Die hohe Korrosionsbeständigkeit von Quarz, Glas und Email gegen Säuren ist bekannt. Eine große Gefahr besteht jedoch darin, daß sich in der Emailschicht unter bestimmten Betriebsbedingungen Haarrisse bilden, insbesondere bei Wärmeübertragung.

Emailbeschichtungen werden bei hoher Temperatur auf Stahl aufgebracht. Infolge der verschiedenen Wärmeausdehnungskoeffizienten von Stahl und Emailschicht entsteht beim Abkühlen eine Druckspannung in der Emailschicht, welche an sich erwünscht und zur Verhinderung von Rissen in der Emailschicht notwendig ist. Bei Umgebungstemperatur von 25 °C beträgt die dieser Druckspannung (100 %) entsprechende Stauchung der Emailschicht etwa 0,001 5 m pro 1 m. Mit sinkender Temperatur nimmt die Druckspannung zu, mit steigender Temperatur entsprechend ab, so daß sie bei einer mittleren Temperatur von ca. 400 °C Null wird.

Verschiedene unter praktischen Einsatzbedingungen vorkommende Faktoren führen bei den bekannten Verdampfervorrichtungen dazu, daß bereits bei niedrigen mittleren Temperaturen die Druckspannung Null oder sogar negativ wird, was fast zwangsläufig zu den gefürchteten Haarrissen führt. Zu diesem Faktoren gehört z. B. die Übertragung von Wärme auf das zu behandelnde Medium von der Stahlseite her durch die Emailschicht. Infolge des bekannten Temperaturverlaufs bei Übertragen von Wärme hat die Emailschicht eine geringere mittlere Temperatur als die Stahlschicht, wodurch die Druckspannungen der Emailschicht im Vergleich zum stationären Zustand vermindert wird. Diese in jedem Wärmetauscher vorhandene Erscheinung wird noch weiter negativ beeinflußt durch ungleichmäßige Erwärmung oder Abkühlung der emailbeschichteten Wand, z. B. dadurch, daß die Wärmezufuhr von der Stahlseite ungleichmäßig ist, oder dadurch, daß die Kühlung auf der Seite der Emailschicht infolge von Verkrustungen dieser Schicht oder infolge ungleichmäßiger Strömung des zu erwärmenden Mediums oder dessen teilweiser Verdampfung ungleichmäßig erfolgt.

Der vorliegenden Erfindung liegt deshalb die Aufgabe zugrunde, eine Verdampfervorrichtung zu schaffen, die es gestattet, trotz hohen Arbeitstemperaturen von gegen 350 °C die Haarrißbildung zu vermeiden. Zu diesem Zweck ist die erfindungsgemäße Verdampfervorrichtung gekennzeichnet durch eine als Wärmetauscher zum Aufheizen der Säure dienende Rohrschlange, deren Auslaß über ein Steigrohr mit einem Ausdampfbehälter des Entspannungsverdampfers verbunden ist. Dabei kann die Rohrschlange aus einem oder mehreren hintereinander geschalteten emaillierten Doppelmantelrohren gebildet werden.

Besonders bevorzugt ist die Ausführungsform, in der die Rohrschlange des Wärmetauschers eine vom Einlaß zum Auslaß ansteigende Rohrspirale bildet, die aus durch Rohrbogen in Serie miteinander verbundenen geraden Rohrstücken besteht, wobei die Rohrstücke je von einem Heizmantel umschlossen sind, wobei diese Heizmäntel einen Wärmeträger im Gegenstrom zur Säure führen, wobei die Rohrbogen aus flanschverbundenen 90°-Doppelbogen bestehen. Dank dieser einen Umlaufbetrieb gestattenden Ausbildung ist es möglich, auch beim Konzentrieren der Schwefelsäure bis zum azeotropen Punkt von 98,3 % bei Temperaturen von ca. 320 °C eine Restspannung in der Emailschicht von mindestens 20 % jener Spannung aufrecht zu erhalten, welche die Emailschicht bei Raumtemperatur aufweist. Diese Restspannung von mindestens 20 % verhindert das Entstehen von Haarrissen, so daß die Emailschicht den Rohrkanal des Wärmeaustauschers einwandfrei gegen Korrosion durch die heiße, hochkonzentrierte Säure schützt. Da im Wärmeaustauscher keine Verdampfung erfolgt, also auch keine zu örtlichen Druckstößen oder Überhitzungen führende Dampfblasen entstehen, und außerdem durch das Umlaufverfahren infolge relativ kleiner Temperaturdifferenzen eine besonders gleichmäßige und relativ langsame Erhitzung der Säure gewährleistet ist, was auch infolge genügend hoch wählbarer Umlaufgeschwindigkeit ein Verkrusten der Emailschicht mit Ablagerungen aus der meist verunreinigten Säure vermeiden läßt, kann ein vollständiger Abbau der genannten Restspannung in der Emailschicht mit Sicherheit vermieden werden. Nun könnte allerdings eine unter gegebenen verfahrenstechnischen Bedingungen vorhandene Druckspannung in der Emailschicht auch dadurch vermindert werden, daß sich die Vorrichtungskomponente infolge mechanischer (z. B. Durchbiegen) oder thermischer Einflüsse derart deformiert, daß emailseitig eine Dehnung und somit eine Druckspannungsverminderung bzw. sogar eine Zugspannung entstehen kann. Eine Vermeidung solcher unerwünschter Deformationen ist speziell im Bereich des Wärmeaustauschers von größter Bedeutung, da ja in diesem Teil, wie bereits oben erwähnt, die Druckspannung in der Emailschicht ohnehin schon durch die Wärmeübertragung und die dadurch entstehenden Temperaturgradienten vermindert wird, so daß eine weitere Verminderung durch Deformation möglichst vermieden werden muß. Dies ist erfindungsgemäß in dickwandigen stabilen Wärmeaustauscherrohren mit flexiblem Mantel für das Wärmeträgermedium gewährleistet.

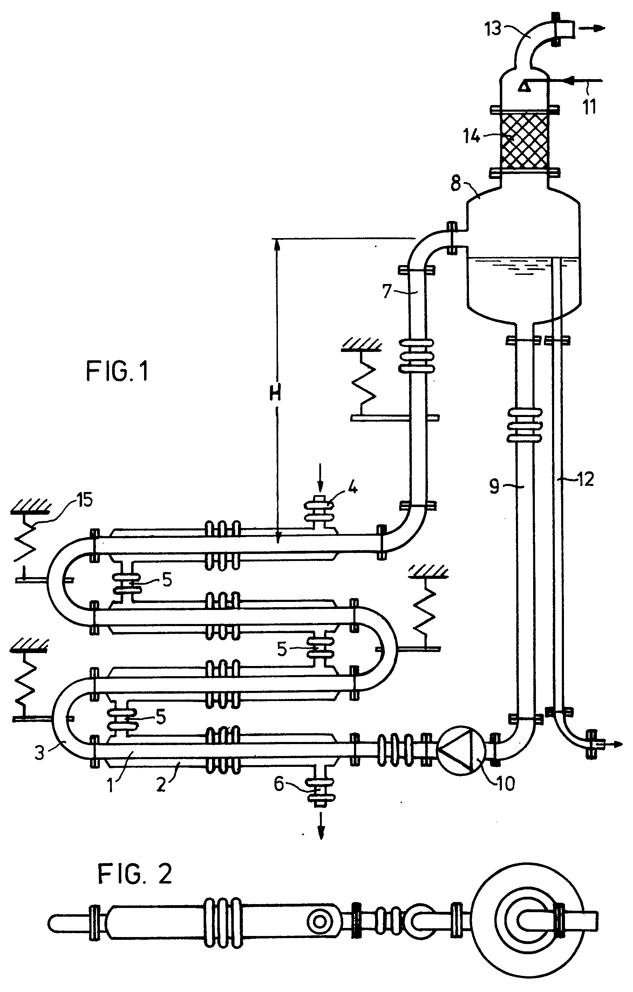

Anhand der Fig. 1 und 2 wird die erfindungsgemäße Vorrichtung erläutert. Die dargestellte Umlaufverdampfervorrichtung zum Konzentrieren von Mineralsäure, insbesondere Schwefelsäure, besteht aus einem oder mehreren hinereinandergeschalteten emaillierten Rohren 1, welche mit einem Doppelmantel 2 zur Führung eines Heizmediums im Gegenstrom zur Säure versehen sind. Die einzelnen Rohre 1, welche in diesem Ausführungsbeispiel in einer Vertikalebene liegen, sind durch Rohrbögen 3 in Serie miteinander verbunden. Über ein Steigrohr 7 stehen die Wärmeaustauscherrohre 1 auslaufseitig mit einem Ausdampfbehälter 8 in Verbindung. Von diesem führt eine Umlaufleitung 9 zur Saugseite einer Umwälzpumpe 10, deren Druckstutzen mit dem untersten Wärmeaustauscherrohr 1 in Verbindung steht.

Die dünne Säure wird dem Ausdampfbehälter 8 der Vorrichtung über ein Zulaufrohr 11 zugeführt, während die konzentrierte Säure den Behälter 8 über ein Überlaufrohr 12 kontinuierlich verläßt. Im gezeichneten Beispiel passiert die dünne Säure zunächst eine Rektifizierkolonne 14 im Gegenstrom zu den aufsteigenden Brüden, welche die Vorrichtung über den Stutzen 13 verlassen.

Das Heizmedium, vorzugsweise Wärmeträgeröl (bei Betrieb im niedrigeren Temperaturbereich ist auch Wasserdampf verwendbar) tritt über den Stutzen 4 in den Doppelmantel 2 des letzten Wärmetauscherrohres 1 ein und gelangt über die Verbindungsleitung 5 in den jeweils nächsten Doppelmantel 2, um die Vorrichtung unten durch den Stutzen 6 zu verlassen.

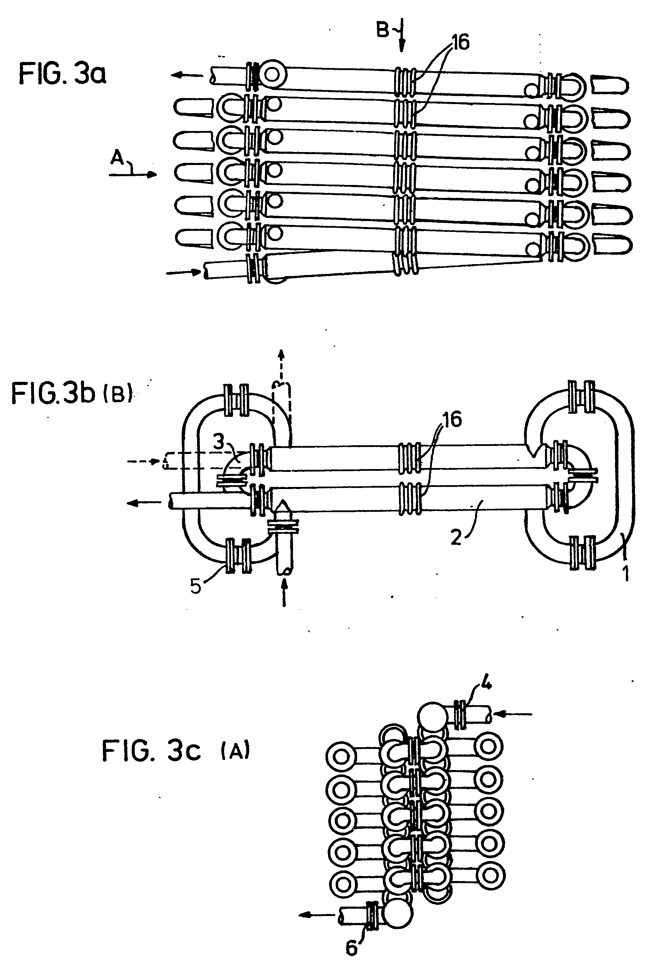

In einer bevorzugten Ausführungsvariante werden die geraden Wärmetauscherrohre durch 90°-Rohrbogen verbunden in der Art, daß insgesamt ein spiralförmiges Gebilde entsteht, wie es in Fig. 3 a-c gezeigt wird. Durch die Pfeile (A, B) in Fig. 3a werden die jeweiligen Seitenansichten in Fig. 3b (B) und in Fig. 3c (A) angegeben.

Das Wesentliche an der erfindungsgemäßen Vorrichtung ist nun, daß alle Vorbedingungen erfüllt werden können, um die zur Rißvermeidung notwendige Restdruckspannung in den emaillierten Schichten zu gewährleisten.

Hierzu sei in erster Linie die gesamte Temperaturführung erwähnt, welche im vorliegenden Fall dadurch realisiert werden kann, daß die Säure zwangsläufig mit einer solchen vorgegebenen Geschwindigkeit an den Wärmetauscherflächen verbeiströmt, daß keine Feststoffablagerung an diesen Flächen und an den Wärmetauscherflächen keine Verdampfung stattfindet, sondern lediglich eine Erhitzung der Säure. Aus diesem Grunde wird erfindungsgemäß ein Mehrfaches der zu konzentrierenden Säuremenge in der Apparatur umgewälzt und gleichzeitig dafür gesorgt, daß der statische Druck am Austritt des letzten Wärmetauscherrohres genügend groß ist, um bei der vorgegebenen Säuretemperatur eine Verdampfung zu vermeiden. Dies kann in jedem Fall durch die Wahl der Höhe H des Steigrohres 7 bewerkstelligt werden. Die in den Wärmetauschern erhitzte Säure beginnt also im wesentlichen erst im Verlaufe des Aufsteigens durch Steigrohr 7 zu verdampfen, wobei der wesentlichste Teil der Verdampfung im Ausdampfbehälter 8 stattfindet.

Eine exakte Temperaturführung wird ebenfalls von der Heizmediumseite her beeinflußt, und mit der Wahl der Heizmedium-Eintrittstemperatur am Stutzen 4 und der Strömungsmenge hat man es in der Hand, die Temperaturdifferenz zwischen Wärmeträger und Säure auf den Wert zu begrenzen, welcher noch die Aufrechterhaltung der erfindungsgemäß notwendigen Druckspannung von 20 % in der Emailschicht gewährleistet. Je höher die mittlere Betriebstemperatur liegt, umso kleiner ist die zulässige Temperaturdifferenz und umgekehrt.

Die Temperaturdifferenzen zwischen Säure und Wärmeträgermedium werden vorzugsweise automatisch reguliert bzw. begrenzt, so daß für jeden Betriebszustand eine optimale noch zulässige Temperatur gewährleistet ist, bei der die 20 %ige Restspannung noch vorhanden ist. Dadurch können, wie oben erwähnt, Haarrisse in der Emailschicht vermieden werden, und gleichzeitig können die jeweils höchsten zulässigen Wärmestromdichten erreicht werden, so daß emailbeschichtete Apparaturen wirtschaftlich eingesetzt werden können. Die als maximal betrachteten zulässigen Temperaturdifferenzen hängen natürlich ab von den Strömungsverhältnissen bzw. den Wärmeübertragungskoeffizienten, so daß deren exakte Steuerung ebenfalls von Wichtigkeit ist.

Erfindungsgemäß ist es wesentlich, in der Emailschicht eine Reststauchung bzw. Restdruckspannung unter allen Betriebsbedingungen aufrecht zu erhalten. Diese soll so groß als unter den jeweiligen Betriebsbedingungen möglich sein, vorzugsweise nicht kleiner als 0,000 3 m pro m. In sehr speziellen Fällen sind jedoch auch kleinere Restdruckspannungen zulässig, aber nur, wenn keine Deformation und andere negativen Einflüsse zu befürchten sind und zwar bis ca. 0,000 15 m pro 1 m, d. h. mindestens 10 % der ursprünglichen Druckspannung müssen noch vorhanden sein.

Die Geschwindigkeit der Säure in den Wärmetauscherrohren kann erfindungsgemäß in einem Bereich zwischen 0,4 und 4 m/Sek. variiert werden. Bevorzugt wird eine Geschwindigkeit von 0,8-1,2 m/Sek., weil bei dieser Geschwindigkeit Feststoffe in Suspension bleiben.

In der gezeichneten Vorrichtung sind darüber hinaus Maßnahmen getroffen, welche eine unzulässige Deformation infolge mechanischer oder thermischer Spannungen auf die emaillierten Werkstücke vermeiden. Hierzu gehören die Axialkompensatoren 15 in den Säureumlaufleitungen 1, 7, 9 sowie die Kompensatoren 16 in den Verbindungsleitungen 4, 5, 6 und Doppelmänteln 2 für Wärmeträger. Die Gruppe der Wärmetauscherrohre 1 selbst ist, wie bei 17 gezeigt, federnd aufgehängt.

Es ist möglich, auch den Ausdampfbehälter 8 und die Rohre 7 und 9 mit Email zu beschichten. Der Ausdampfbehälter 8 könnte aber ebenso wie die Umwälzpumpe aus einem säurebeständigen Material bestehen oder z. B. ausgemauert sein.

Die erfindungsgemäße Vorrichtung soll durch die folgenden Beispiele noch näher erläutert werden.

## Beispiel 1

Über die Zuführleitung 11 werden pro Stunde 2 409 kg Schwefelsäure mit 41,5 Gew.-% $H_2SO_4$ bei

einer Temperatur von 50 °C zugeleitet, und über die Uberlaufleitung 12 verlassen pro Stunde 1 323 kg 75 %ige Schwefelsäure mit einer Temperatur von 185 °C die Vorrichtung.

Im Unterteil des Ausdampfbehälters 8 befindet sich also Säure mit einer Temperatur von 185 °C und einer Konzentration von 75 % $H_2SO_4$. Durch die Umwälzpumpe 10 wird eine Menge von 91 500 kg pro Stunde umgewälzt, was bei entsprechender Wahl des Durchmessers der Wärmetauscherrohre eine Geschwindigkeit von 1 m pro Sekunde ergibt. Am Eintritt in das erste Wärmetauscherrohr beträgt die Temperatur ca. 185 °C, am Austritt des letzten Wärmetauscherrohres 205 °C, der statische Druck an dieser Stelle 1 070 Torr (1.44 bar) und der Druck im Verdampfungsraum von Behälter 8 760 Torr (1.013 bar). Die Wärmetauscherrohre werden in diesem Beispiel mit Sattdampf von 30 bar abs beheizt, und unter den geschilderten Betriebsbedingungen herrscht in der Emailschicht am Eintritt zum ersten Wärmetauscherrohr 35 % der Ursprungsdruckspannung, am Austritt aus dem letzten Wärmetauscherrohr eine Restdruckspannung von 40 %.

## Beispiel 1

Vorkonzentrierstufe 41,5 + 75 % $H_2SO_4$

### Zustand im Ausdampfbehälter 8

| | |
|---|---|
| Konzentration | $X = 75\,\%\ H_2SO_4$ |
| Temperatur | $t = 185\ °C$ |
| Druck | $p = 760\ \text{Torr} \,\hat{=}\, 1{,}013\ \text{bar abs}$ |

### Zustand Schwefelsäure im Wärmetauscher

| | |
|---|---|
| Temperatur Eintritt | $t1 = 185\ °C$ |
| Temperatur Austritt | $t2 = 205\ °C$ |
| Druck Austritt | $p2 = 1{,}44\ \text{bar abs}$ |

Umwälzmenge bei 24 tato (1 000 kg/h) $H_2SO_4$ 100 %
Leistung beim Konzentrieren von 41,5 auf 75 % $H_2SO_4$

$$\sqrt{U_1} = 57{,}2\ m^3/h \text{ bei } t = 185\ °C$$
$$\sim 86'800\ kg/h$$

### Heizmedium (Sattdampf)

| | |
|---|---|
| Dampfdruck | $p = 30\ \text{bar abs}$ |
| Kondensationstemperatur | $t = 234\ °C$ |
| Dampfmenge * | $m = 2\ 000\ kg/h$ |

* bezogen auf die obige Leistung unter Ausnutzung nur der Kondensationswärme !

### Emailstauchung

Bei einer Säuregeschwindigkeit von 1 m/s ist noch eine Reststauchung von $0.52 \cdot 10^{-3}$ m pro m vorhanden !

## Beispiel 2

1 333 kg pro Stunde 75 %iger Schwefelsäure mit einer Eintrittstemperatur von 185 °C sind auf 98 % $H_2SO_4$ aufzukonzentrieren. Im Ausdampfbehälter 8 herrscht ein Druck von 60 Torr (0,07 bar abs), und die konzentrierte Säure hat eine Temperatur von 240 ºC. Eine Menge von 29 000 kg (17,9 $m^3/h$) pro Stunde wird durch Umwälzpumpe 10 umgewälzt und in den Wärmetauscherrohren auf 260 °C aufgewärmt ; der Druck am Austritt des letzten Wärmetauscherrohres beträgt 410 Torr (0,55 bar abs).

Die Wärmetauscherrohre werden mit Wärmeträgeröl beheizt, welches bei 4 mit einer Temperatur von 310 °C eintritt, wie in Figur 1 gezeigt, im Gegenstrom zur Säure fließt, die Vorrichtung über Austrittsstutzen 6 mit einer Temperatur von 290 °C verläßt. Unter diesem Betriebsbedingungen beträgt die Restdruckspannung am Eintritt in das erste Wärmetauscherrohr 27 %, am Austritt aus dem letzten Wärmetauscherrohr 21 %. In diesem Beispiel beträgt der Eisensulfatgehalt der dünnen Säure 200 ppm, bezogen auf 100 %ige Säure. In 98 %iger Säure bei einer Temperatur von 240 °C sind jedoch nur ca. 20 ppm löslich, d. h. daß ein beträchtlicher Teil als Feststoff ausfällt. In der erfindungsgemäßen Vorrichtung geschieht dies im Ausdampfbehälter 8, so daß die Feststoffe in Suspension bleiben und kontinuierlich mit der konzentrierten Säure abgezogen werden können und sich nicht etwa an den Wärmetauscherflächen ablagern, wie dies der Fall wäre, wenn hier auch eine Verdampfung stattfinden würde.

## Beispiel 2

Hochkonzentrierstufe 75 bis 98 % $H_2SO_4$

### Zustand im Ausdampfbehälter 8

| | |
|---|---|
| Konzentration | $X = 98\,\%\ H_2SO_4$ |
| Temperatur | $t = 240\ °C$ |
| Druck | $p = 60\ Torr \mathrel{\hat{=}} 0{,}08\ bar\ abs$ |

### Zustand der Schwefelsäure im Wärmeaustauscher

| | |
|---|---|
| Temperatur Eintritt | $t1 = 240\ °C$ |
| Temperatur Austritt | $t2 = 260\ °C$ |
| Druck Austritt | $p2 = 410\ Torr \mathrel{\hat{=}} 0{,}55\ bar\ abs$ |

Umwälzmenge (Schwefelsäure) bei einer Leistung von 1 000 kg/h $H_2SO_4$ 100 % beim Konzentrieren von 75 auf 98 % $H_2SO_4$

$$m = 8{,}056\ kg/s$$
$$u_1 = 17{,}9\ m^3/h\ bei\ t = 240\ °C$$

### Wärmeträgerdaten

| | |
|---|---|
| Temperatur Eintritt 4 | $t1 = 310\ °C$ |
| Temperatur Austritt 6 | $t2 = 290\ °C$ |
| Volumenstrom bei 310 °C | $\sqrt{1} = 26.1\ m^3/h$ |

### Emailstauchung

Bei Säure- und Wärmeträgergeschwindigkeiten von 1 m/s wird die erfindungsgemäße zulässige Reststauchung von 0,003 m pro 1 m (entsprechend 20 %) nicht unterschritten.

**Ansprüche**

1. Umlauf-Verdampfervorrichtung mit einem Entspannungsverdampfer zum Konzentrieren von Mineralsäure, insbesondere von Schwefelsäure, gekennzeichnet durch eine als Wärmetauscher zum Aufheizen der Säure dienende Rohrschlange aus emaillierten Rohren, deren Auslaß über ein Steigrohr mit einem Ausdampfbehälter des Entspannungsverdampfers verbunden ist, wobei in der Emailschicht der Rohre eine Reststauchung bzw. Restdruckspannung von nicht kleiner als 0,000 3 m pro m aufrechterhalten wird.

2. Umlauf-Verdampfervorrichtung gemäß Anspruch 1, dadurch gekennzeichnet, daß die Rohrschlange aus einem oder mehreren hintereinander geschalteten emaillierten Doppelmantelrohren gebildet wird.

3. Umlauf-Verdampfervorrichtung nach einem der Ansprüche 1 oder 2, dadurch gekennzeichnet, daß die Rohrschlange des Wärmetauschers eine vom Einlaß zum Auslaß ansteigende Rohrspirale bildet, die aus durch Rohrbogen in Serie miteinander verbundenen gerade Rohrstücken besteht, wobei die Rohrstücke je von einem Heizmantel umschlossen sind, wobei diese Heizmäntel einen Wärmeträger im Gegenstrom zur Säure führen, wobei die Rohrbogen aus flanschverbundenen 90°-Doppelbogen bestehen.

4. Umlauf-Verdampfervorrichtung gemäß einem der Ansprüche 1 bis 3, dadurch gekennzeichnet, daß Steigrohr, Umlaufleitung und Heizmäntel Dehnungskompensatoren aufweisen.

**Claims**

1. A circulation evaporator having a flash evaporator for concentrating mineral acid, particularly sulphuric acid, characterised by a tubular coil consisting of enamelled pipes which is used as a heat exchanger for heating the acid and of which the outlet is connected by a riser to an evaporation vessel of the flash evaporator, a residual compression or residual compressive stress of no less than 0.000 3 m per m being maintained in the enamel layer of the pipes.

2. A circulation evaporator according to Claim 1, characterised in that the tubular coil is formed from one or more enamelled double-jacketed tubes arranged in succession.

3. A circulation evaporator according to one of Claims 1 or 2, characterised in that the tubular coil of the heat exchanger forms a tubular spiral which climbs from its inlet to its outlet end and which consists of straight pipe sections which are interconnected in series by pipe bends, each of the pipe sections being surrounded by a heating jacket, the heating jackets being filled with a heat carrier circulating in countercurrent to the acid, and the pipe bends consisting of flangeconnected 90°-double bends.

4. A circulation evaporator according to one of Claims 1 to 3, characterised in that the riser, the circulation pipe and the heating jackets contain expansion compensators.

### Revendications

1. Dispositif d'évaporation à recyclage, comprenant un évaporateur éclair pour concentrer des acides minéraux, en particulier l'acide sulfurique, caractérisé par un serpentin de tubes vitrifiés, servant d'échangeur de chaleur pour chauffer l'acide, dont la sortie est reliée par un tuyau ascendant à un récipient d'évaporation de l'évaporateur éclair, la compression résiduelle respectivement la contrainte de compression résiduelle dans la couche d'émail des tubes étant maintenue à au moins 0,003 m par mètre.

2. Dispositif d'évaporation selon la revendication 1, caractérisé en ce que le serpentin est constitué d'un seul ou de plusieurs tubes à double enveloppe vitrifiés branchés en série.

3. Dispositif d'évaporation selon la revendication 1 ou 2, caractérisé en ce que le serpentin de l'échangeur de chaleur forme une conduite tubulaire spiralée qui monte de l'entrée à la sortie et est constituée de tronçons droits reliés en série entre eux par des tronçons courbes, les tronçons tubulaires droits étant entourés chacun d'une enveloppe chauffante parcourue d'un caloporteur à contre-courant avec l'acide, les tronçons tubulaires courbes étant formés chacun de deux coudes de 90° bridés ensemble.

4. Dispositif d'évaporation selon l'une des revendications 1 à 3, caractérisé en ce que le tuyau ascendant, la conduite de recyclage et les enveloppes chauffantes présentent des compensateurs de dilatation.

FIG.1

FIG. 2

FIG. 3a

FIG. 3b (B)

FIG. 3c (A)